Europäisches Patentamt

European Patent Office

Office européen des brevets

(19)

(11) EP 0 737 607 A1

(12) **EUROPEAN PATENT APPLICATION**

(43) Date of publication:
16.10.1996 Bulletin 1996/42

(51) Int. Cl.<sup>6</sup>: **B60S 1/08**

(21) Application number: 96200558.3

(22) Date of filing: 01.03.1996

(84) Designated Contracting States:
AT DE ES FR GB IT NL SE

(30) Priority: 04.04.1995 NL 1000031

(71) Applicant: NETHERLANDS CAR B.V.
6121 RD Born (NL)

(72) Inventor: De Regt, Hendrik Cornelis
5631 NB Eindhoven (NL)

(74) Representative: Van kan, Johan Joseph Hubert,
Ir.
Algemeen Octrooibureau
P.O. Box 645
5600 AP Eindhoven (NL)

(54) **Vehicle windscreen wiper motor control circuit**

(57) Control circuits for continuously or intermittently driving a controllable motor at different speeds and/or different intervals are known, for example for controlling a windscreen wiper.

A drawback of the known control circuit is the fact that the user must make a choice between intermittent operation and continuous operation.

The invention provides a control circuit which comprises a substantially continuously variable switch for controlling the speed above a predetermined minimum motor speed and for controlling the interval at a predetermined minimum motor speed.

FIG. 1

EP 0 737 607 A1

## Description

The invention relates to a control circuit for continuously or intermittently driving a controllable motor at different speeds and/or different intervals.

A control circuit of this type may for example be used in a car, a boat, an aeroplane etc. for controlling a windscreen wiper motor.

A control circuit of this type is known from Dutch Patent Application NL-A-7311846. Said control circuit includes a change-over switch for manually changing over from continuous to intermittent operation and vice versa, as well as a time switch comprising means for varying the interval between two strokes of the windscreen wiper. Said means make it possible to create at least two different intervals.

A drawback of this known control circuit is that the user needs to perform to operations, that is, first he will have to make a choice between continuous and intermittent operation, and secondly he will have to select the (delay) interval during intermittent operation. The windscreen may not become completely clean/try during intermittent operation, whilst the speed may be too high during continuous operation, causing the windscreen wiper to produce a squeaking sound.

Another drawback is the fact that this known control circuit is costly and thus requires high investments.

The object of the invention is to provide a control circuit which does not have the above drawbacks, and in order to accomplish that objective a control circuit according to the invention is characterized in that said control circuit includes an at least substantially continuously variable switch for controlling the motor speed above a predetermined minimum motor speed and for controlling the interval at a predetermined minimum motor speed.

The control circuit according to the invention leads to a reduction of the cost price by 25%, whilst also the amount to be invested is reduced by 25%. Furthermore an improvement with regard to the ergonomic aspect is obtained, because the operating means windscreen wiper control remains in one fixed position in (for example) the car, which also enhances safety. With known systems the operating means occupies more than one position, which is disadvantageous from a safety point of view.

One embodiment of a control circuit according to the invention is characterized in that said motor is a windscreen wiper motor for operating at least one windscreen wiper for a vehicle.

The invention will be explained in more detail below with reference to the accompanying Figures, in which:

Figure 1 shows a schematic embodiment of the control circuit according to the invention; and
Figure 2 shows a transfer function from input to output of the control circuit; and
Figure 3 is a block diagram of an embodiment of a control circuit according to the invention.

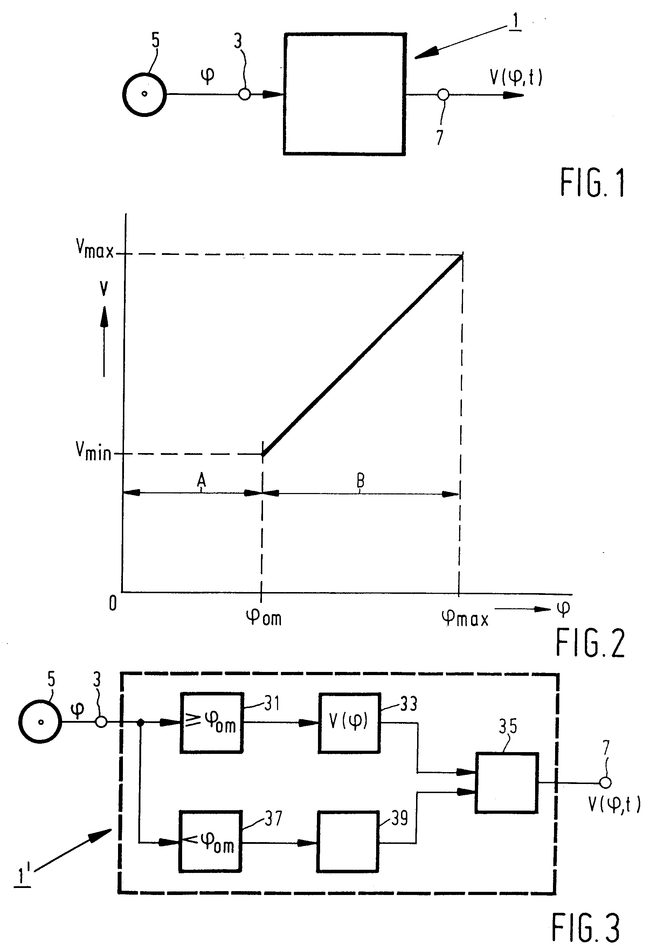

Figure 1 shows a control circuit 1 for controlling a windscreen motor, for example. The control circuit includes a continuously variable switch 5 (for example a potentiometer) to be adjusted by the user, which is connected to other components (not shown) of the control circuit via a pin 3.

On the basis of the value adjusted by the user (by means of the switch 5) the control circuit will determine both the speed of the windscreen wiper motor (viz. between Vmin and Vmax) and the operating mode (intermittent or not). This value determined in the control circuit is delivered at an output 7 in the form of a signal V. Said signal V is sent to the windscreen wiper motor.

As a result of this the user (the driver, for example) no longer needs to make a choice between intermittent operation and continuous operation, and a continuously variable control has been obtained.

Figure 2 shows the transfer function of position $\phi$ of the continuously variable switch 5 to a signal V corresponding with a resulting speed of for example the windscreen wiper motor (not shown), whether or not in intermittent operating mode. In area A the control circuit delivers a signal V=Vmin in the shape of for example pulses, whereby the distance between the pulses is determined by the position of the switch 5 ($\phi$ between o and $\phi$om).

In position $\phi$om the control circuit automatically changes over from intermittent to continuous operation. From position $\phi$om to $\phi$max signal V increases linearly from Vmin to Vmax, as a result of which the speed of the windscreen wiper motor (in this embodiment) increases linearly.

Conversely, when the continuously variable switch is reversed from position $\phi$max, the control circuit will automatically change over to intermittent operation at 0om.

Positions $\phi$om, Vmin and Vmax can be preset in dependence on the windscreen wiper, the windscreen wiper motor, etc.

Figure 3 shows a block diagram of an embodiment of a control circuit 1' according to the invention. Position 0 of the substantially continuously variable switch 5 is supplied to the other part of the control circuit via pin 3. Pin 3 is connected to a comparator circuit 31, which comparator circuit delivers a signal in dependence on signal $\phi$, provided $\rangle \geq \phi$orr. Then signal V is determined in a converter circuit 33 in dependence on $\phi$. The output of said converter circuit is connected to a mixing circuit 35, which mixing circuit is connected with one output to pin 7 and which delivers on this output the signal which is presented to either one of two inputs.

Pin 3 is also connected to a comparator circuit 37, which comparator circuit delivers a signal at its output in dependence on signal $\phi$, provided $\phi < \phi$om. The output of the comparator circuit 37 is connected to a second converter circuit 39, in which converter circuit an intermittent signal Vmin is obtained, whereby the interval period is determined by $\phi$. The output of said converter circuit 39 is connected to the second input of the mixing circuit.

It will be apparent that the control circuit according to the invention can be modified in several ways without departing from the essence of the invention. Thus the control circuit will often be integrated, whereby the design may be different from the design shown in the block diagram of Figure 3. Furthermore it will be possible to integrate the control circuit in a larger unit (a larger module comprising integrated functions).

When the control circuit is used for a windscreen wiper, it is also possible to reduce $\phi$ by half, for example when the car is waiting at a traffic light, and switch back to the "old" value when the car starts driving again.

The substantially continuously variable switch may be a (possibly digital) potentiometer, a stepping switch, etc.

## Claims

1. A control circuit for continuously or intermittently driving a controllable motor at different speeds and/or different intervals, characterized in that said control circuit includes an at least substantially continuously variable switch for controlling the motor speed above a predetermined minimum motor speed and for controlling the interval at a predetermined minimum motor speed.

2. A control circuit according to claim 1, characterized in that said switch comprises a potentiometer.

3. A control circuit according to claim 1 or 2, characterized in that said motor is a windscreen wiper motor for operating at least one windscreen wiper of a vehicle.

FIG.1

FIG.2

FIG.3

**European Patent Office**

# EUROPEAN SEARCH REPORT

Application Number

EP 96 20 0558

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 504 606 (MAN NUTZFAHRZEUGE GMBH) 23 September 1992 | 1,3 | B60S1/08 |
| A | * abstract; claims 1-3,7-10; figures 1,3,5 * | 2 | |
| | * column 1, line 36 - line 53 * | | |
| | * column 2, line 11 - column 5, line 42 * | | |
| | * column 8, line 18 - line 51 * | | |
| | --- | | |
| Y | DE-C-33 27 373 (LEOPOLD KOSTAL GMBH) 20 December 1984 | 1-3 | |
| | * the whole document * | | |
| | --- | | |
| Y | EP-A-0 208 142 (KEARNS ET AL) 14 January 1987 | 1-3 | |
| | * abstract; figures 1,2 * | | |
| | * column 2, line 45 - column 3, line 3 * | | |
| | * column 4, line 3 - column 8, line 36 * | | |
| | --- | | |
| X | DE-C-42 05 268 (MERCEDES-BENZ AG) 28 January 1993 | 1,3 | |
| | * the whole document * | | TECHNICAL FIELDS SEARCHED (Int.Cl.6) |
| | --- | | |
| A | US-A-4 947 092 (NABHA ET AL) 7 August 1990 | 1-3 | B60S |
| | * abstract; claim 1; figures 1,2 * | | H02P |
| | * column 2, line 20 - column 3, line 32 * | | |
| | ----- | | |

The present search report has been drawn up for all claims

| Place of search | Date of completion of the search | Examiner |
|---|---|---|
| THE HAGUE | 20 June 1996 | Westland, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)